# EUROPEAN PATENT SPECIFICATION

(11) **EP 1 106 084 B1**
(45) Date of publication and mention of the grant of the patent: **26.07.2006**
(21) Application number: 00125350.9
(22) Date of filing: 30.11.2000
(51) Int. Cl.: A23L 3/3445, A21D 15/00, B65B 31/02, B65B 25/04, A23B 7/152, A23B 7/148, A23B 7/154, A23L 3/3418, A23L 3/3481

(54) **Method and apparatus for packaging food products, particularly bakery products and fruit, in a modified atmosphere**
Verfahren und Vorrichtung zum Verpacken in einer geänderten Atmosphäre von Nahrungsmitteln insbesondere von Backwaren und Früchten
Procédé et appareil d'emballage d'aliments, en particulier de la patisserie et des fruits, sous atmosphère modifiée

(30) Priority: 06.12.1999 IT MI992553
(43) Date of publication of application: 13.06.2001
(73) Proprietor: Comi, Roberto, 20010 Cornaredo (Milano) (IT)
(72) Inventor: Comi, Roberto, 20010 Cornaredo (Milano) (IT)
(74) Representative: Modiano, Micaela Nadia

(56) References cited:
- WO-A-95/31093
- WO-A-99/48770
- US-A- 4 027 707
- US-A- 4 058 953
- DATABASE WPI Section Ch, Week 198015 Derwent Publications Ltd., London, GB; Class D14, AN 1980-26442C XP002167410 & JP 55 029426 A (GENERAL PACKER KK), 1 March 1980 (1980-03-01)
- PATENT ABSTRACTS OF JAPAN vol. 007, no. 122 (C-168), 26 May 1983 (1983-05-26) & JP 58 040039 A (TOPPAN INSATSU KK), 8 March 1983 (1983-03-08)
- PATENT ABSTRACTS OF JAPAN vol. 009, no. 211 (C-300), 29 August 1985 (1985-08-29) & JP 60 078538 A (IWATANI SANGYO KK), 4 May 1985 (1985-05-04)
- PATENT ABSTRACTS OF JAPAN vol. 010, no. 085 (C-336), 4 April 1986 (1986-04-04) & JP 60 217859 A (NANKOUEN HANII BANANA KK), 31 October 1985 (1985-10-31)
- PATENT ABSTRACTS OF JAPAN vol. 011, no. 322 (C-453), 20 October 1987 (1987-10-20) & JP 62 107745 A (MOTOO KIRA), 19 May 1987 (1987-05-19)

## Description

The present invention relates to a method and an apparatus for packaging food products, particularly bakery products and fruit, in a modified atmosphere.

Packaging in hermetic enclosures inside which the atmosphere is modified is used in order to preserve bakery products, such as for example bread, cakes, small pastry, for a longer period.

Atmosphere modification is usually performed by partially or fully replacing the air that is present in the enclosure at the beginning of packaging by means of carbon dioxide or nitrogen or by means of a mixture of these two gases in percentages which can vary according to requirements.

The carbon dioxide, by bonding with the water that is present in the product, generates carbonic acid, which has a preservative effect on the products. The nitrogen, in addition to pressurizing the package in replacement of the air, hinders formation of molds.

In some cases, the atmosphere is modified simply by performing a sort of flushing of the internal volume of the packaging enclosure, before sealing it, by means of a stream of gas which is usually constituted by carbon dioxide or nitrogen or by a mixture of these two gases, which partially replaces the volume of air around the packaged product.

This packaging method, owing to the fact that it only partially replaces the atmosphere inside the packaging enclosure, has the drawback of leaving inside the packaging enclosure an amount of air and therefore of oxygen which is sufficient to cause oxidation phenomena to the product. For this reason, products packaged with this method have a preservation period which is rather short though being variable from product to product.

Another packaging method is based on the use of thermoformed packaging enclosures in which, before performing the sealing process, a preset degree of vacuum is produced and carbon dioxide and/or nitrogen is introduced, thus replacing substantially completely the air that is initially present in the packaging enclosure.

This packaging method, owing to the fact that it substantially completely replaces the air with gas having a preservative effect, ensures an adequate preservation period. Examples of this packaging method are disclosed in prior art documents US-A-4 058 953 and US-A-4 027 707.

In order to reduce the danger of bacterial proliferation inside the packages and thus achieve an even longer preservation period, the products to be packaged are sprayed beforehand with ethyl alcohol, usually mixed with flavoring agents.

However, this refinement is not free from drawbacks, since it leaves inside the product an amount of alcohol which is not always tolerated by the consumer.

Moreover, this amount of alcohol that remains in the product alters the natural odor of the product.

Another drawback, if this method is used in the packaging method that entails the substantially complete replacement of the atmosphere inside the packaging enclosure, is constituted by the fact that since the alcohol is sprayed onto the product before producing vacuum inside the packaging enclosure, a significant part of the alcohol vaporizes during vacuum generation and in practice is not used. Another method of packaging is disclosed in database WPI section Ch, Week 198015 Derwent Publications Ltd., London, GB; Class D14, AM 1980-26442C XP008167410 & JP55 029426 A (General Packer KK), 1 March 1980 in which ethanol vapour is formed by bubbling nitrogen and/or CO₈ into liquid ethanol, while vacuum is not produced.

When a long preservation period is not required for the products, but simply good resistance to bacterial proliferation is required, the product is packaged by first spraying it with alcohol. In this case, the drawbacks noted above are still encountered with reference to the permanence of the alcohol inside the product.

Deep freezing is generally used to preserve fruit.

Particularly for apples, the possibility to package and preserve apples that have already been peeled is required. In order to prevent oxidation phenomena, which would change the color of the apples from white with natural greenish shades to brown or pink, from occurring in the period between peeling and deep-freezing, the apples are washed beforehand in water with the addition of ascorbic acid.

The preservation method in which fruit is deep-frozen, however, is not devoid of problems, since deep-freezing alters the internal structure of the fruit and subsequent thawing, before consuming the fruit, does not return the fruit with its original characteristics of fragrance and consistency.

The aim of the present invention is to solve the above-noted problems by providing a method and an apparatus for packaging food products, particularly bakery products and fruit, in a modified atmosphere, which allows to obtain a longer preservation period than allowable with known methods.

Within this aim, an object of the present invention is to provide a method and an apparatus which allow to package fruit, particularly apples, achieving a preservation period of more than 20 days, without resorting to deep-freezing and maintaining substantially unchanged the color, fragrance and consistency characteristics of the apples.

Another object of the present invention is to provide a method and an apparatus which can be used for the packaging in a modified atmosphere of a wide range of bakery products, such as for example bread, cakes, small pastry, et cetera.

Another object of the present invention is to provide a method and an apparatus for packaging in a modified atmosphere a wide range of fruits, such as for example apples, pears, fruit salad, without resorting to deep-freezing and therefore allowing immediate consumption thereof directly after purchase.

This aim, these and other objects which will become better apparent hereinafter are achieved by a method for packaging food products, particularly bakery products and fruit, according to claim 1.

The method according to the invention is preferably performed by means of an apparatus according to claim 12.

Further chaaracteristics and advantages of the present invention will become better apparent from the following detailed description of a preferred embodiment of the method according to the invention, and of the apparatus for performing it, illustrated by way of example in the accompagnying drawings wherein :

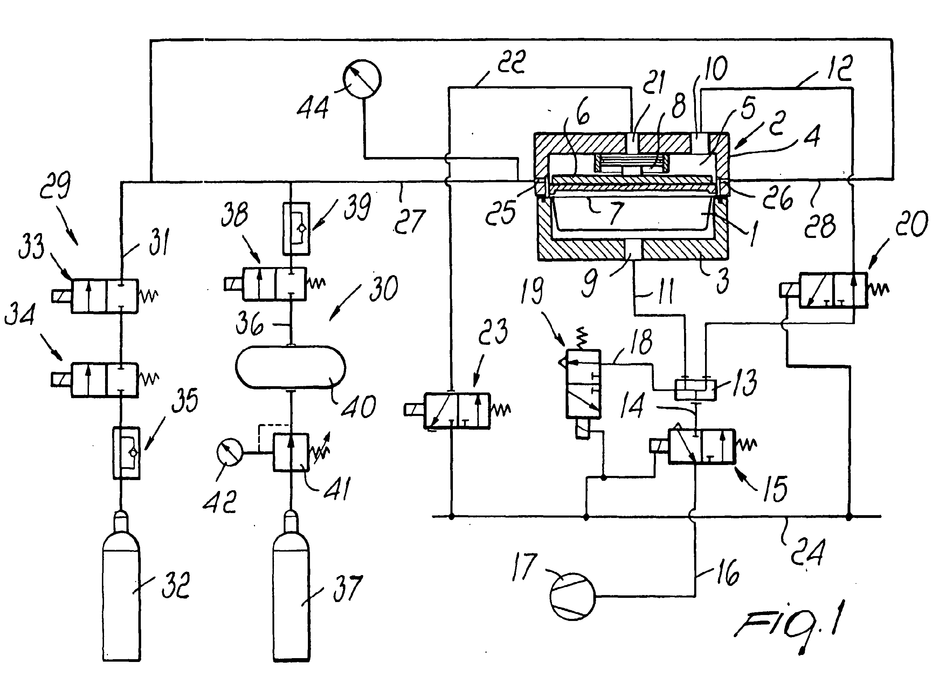

Figures 1 to 5 are schematic views of an apparatus during the execution of the various steps of the method according to the invention.

The method according to the invention consists in: arranging the products to be packaged inside a packaging enclosure 1; producing a preset degree of vacuum inside said packaging enclosure 1; introducing in the packaging enclosure 1 alcohol or a mixture based on alcohol and introducing in said packaging enclosure at least one gas; and sealing said packaging enclosure 1.

Preferably, the alcohol used for the method according to the invention is constituted by ethyl alcohol and is introduced in the packaging enclosure 1 at a pressure which is lower than the atmospheric pressure.

The ethyl alcohol or mixture based on ethyl alcohol is introduced in the packaging enclosure 1 before the other gas is introduced. The mixture based on ethyl alcohol is preferably constituted by ethyl alcohol and natural flavoring agents which may vary according to the product to be packaged so as to obtain, for the mixture based on ethyl alcohol, a fragrance which is compatible with the product to be packaged.

The other gas that is introduced in the packaging enclosure can be, depending on the packaging requirements and on the required preservation period, simply air, nitrogen, carbon dioxide or a mixture of carbon dioxide and nitrogen.

The amount by weight of ethyl alcohol introduced in the packaging enclosure 1 is preferably substantially comprised between 0.01% and 3% of the weight of the product before packaging.

The amount by volume of ethyl alcohol introduced in the packaging enclosure 1 is preferably substantially comprised between 0.01% and 1% of the internal volume of the packaging enclosure 1.

The amount by volume of the carbon dioxide introduced in the packaging enclosure is preferably substantially comprised between 0% and 50% of the internal volume of the packaging enclosure 1.

The amount by volume of nitrogen introduced in the packaging enclosure 1 is preferably substantially comprised between 10% and 90% of the internal volume of the packaging enclosure 1.

The apparatus for performing the method according to the invention, illustrated in Figures 1 to 5, comprises a box-like structure, generally designated by the reference numeral 2, which is composed of a lower element 3 and a lid 4 which internally form a packaging chamber 5.

The structure 2 can be constituted by a conventional one, for example a structure of the type currently used to perform the packaging of products in a modified atmosphere by performing the substantially complete replacement of the air that is present inside the packaging enclosure 1 at the beginning of the packaging process.

The lid 4 can be engaged hermetically with the lower element 3 so as to isolate the chamber 5 from the outside.

The lid 4 can further be provided, on its internal face, with a sealing element 6, also of a known type, which is provided with appropriate heating means for sealing the packaging enclosure 1, as will become apparent hereinafter.

The packaging enclosure 1 is preferably constituted by an enclosure made of thermoformed synthetic material which is open in an upward region and on which a film 7 or lid is deposited which is meant to be connected hermetically, for example by heat-sealing, to the opening of the enclosure 1.

The sealing means 6 can be constituted by a plate, arranged on a substantially horizontal or vertical plane, which is peripherally provided with an edge which protrudes toward the packaging enclosure 1 and is conveniently heated to a preset temperature, in a per se known manner, so as to produce by contact the heat-sealing of the film 7 on the enclosure 1.

The plate that constitutes the sealing means 6 can be actuated by means of a pneumatic cylinder 8 which is provided on the inner side of the lid 4.

The chamber 5 has a first opening 9 which is formed in the lower element 3 and a second opening 10 with is formed in the lid 4. Said two openings 9 and 10 are connected to respective ducts 11 and 12 which are interconnected at a connecting region 13. The connecting region 13 has a first branch 14 which is connected, by means of a first controllable valve 15, to the intake duct 16 of a vacuum pump 17.

The first valve 15 can move on command into two positions: a first position, in which it blocks the connection between the first branch 14 and the intake duct 16, connecting said intake duct 16 to the atmosphere, and a second position, in which it connects the first branch 14 to the intake duct 16.

The connecting region 13 has a second branch 18, on which there is a second controllable valve 19 which can move on command into two positions: an open position, in which it connects the branch 18 to the atmosphere, and a closed position, in which it closes the second branch 18.

A third controllable valve 20 is further arranged along the duct 12 and can move on command into two positions: an open position, in which it connects the duct 12 to the connecting region 13, and a closed position, in which it blocks the connection of the duct 12 to the connecting region 13.

The pneumatic cylinder 8 is connected, by means of a third opening 21, to a supply duct 22 which is connected, by means of a fourth controllable valve 23, to a service line 24 which is supplied with compressed air. The fourth controllable valve 23 can move on command into two positions: a closed position, in which it interrupts the connection of the duct 22 to the service line 24, and an open position, in which it connects the duct 22 to the service line 24.

The chamber 5 is further connected to a fourth opening 25 and to a fifth opening 26, which are connected to respective ducts 27 and 28 which are both connected in parallel to first means 29 for introducing alcohol in the chamber 5 and to second means 30 for introducing at least one gas in the chamber 5.

The first input means 29 comprise a line 31 for supplying alcohol which is connected to a reservoir 32 of alcohol, preferably ethyl alcohol.

Two controllable valves, designated by the reference numerals 33 and 34 respectively, are arranged in series on the supply line 31 and have two operating positions: a closed position, in which they interrupt the connection of the reservoir 32 to the ducts 27 and 28, and an open position, in which they provide said connection

Along the alcohol supply line 31 there is also a flow regulator 35, by means of which it is possible to adjust the flow-rate of alcohol conveyed along the supply line 31.

The second input means 30 comprise a line 36 for supplying at least one gas which is connected to a reservoir 37 of at least one pressurized gas. Said pressurized gas, as mentioned, can be constituted by carbon dioxide or by nitrogen or by a mixture of these two gases.

Along the supply line 36 there is a controllable valve 38 which has two operating positions: a closed position, in which it interrupts the connection of the ducts 27 and 28 to the reservoir 37, and an open position, in which it connects the ducts 27 and 28 to the reservoir 37.

Along the supply line 36 there is also a flow regulator 39 by means of which it is possible to regulate the flow-rate of gas along the supply line 36. A buffer reservoir 40 and a pressure regulator 41, connected to a pressure gauge 42, are also arranged along the supply line 36.

The inside of the packaging enclosure 1 is connected, preferably by means of the duct 27, to a vacuum gauge 44.

The operation of the apparatus in the execution of the method according to the invention is as follows.

Initially, the packaging enclosure 1 with the products to be packaged is introduced, in a per se known manner, in the chamber 5, which is closed by closing hermetically the lid 4 and the lower element 3. In these conditions, the inside of the packaging enclosure 1, in which the product to be packaged is arranged, is connected to the chamber 5, since the film 7 is separated, at at least one of its sides, from the packaging enclosure 1.

Preferably, in the case of peeled fruit, such as for example apples, before introducing said fruit in the packaging enclosure 1 said fruit is subjected to washing with water mixed with ascorbic acid.

In this operating condition, shown in Figure 1, the pump 17 can be operating, but its intake duct 16 is connected to the atmosphere by means of the valve 15, and also the ducts 11 and 12 are connected to the atmosphere by means of the controllable valve 19. The valve 38 and the valves 33 and 34 are in the closed position. The valve 23 is also in the closed position and the piston of the pneumatic cylinder 8, connected to the plate 6, is kept in the raised position in order to keep the plate 6 spaced upward from the film 7.

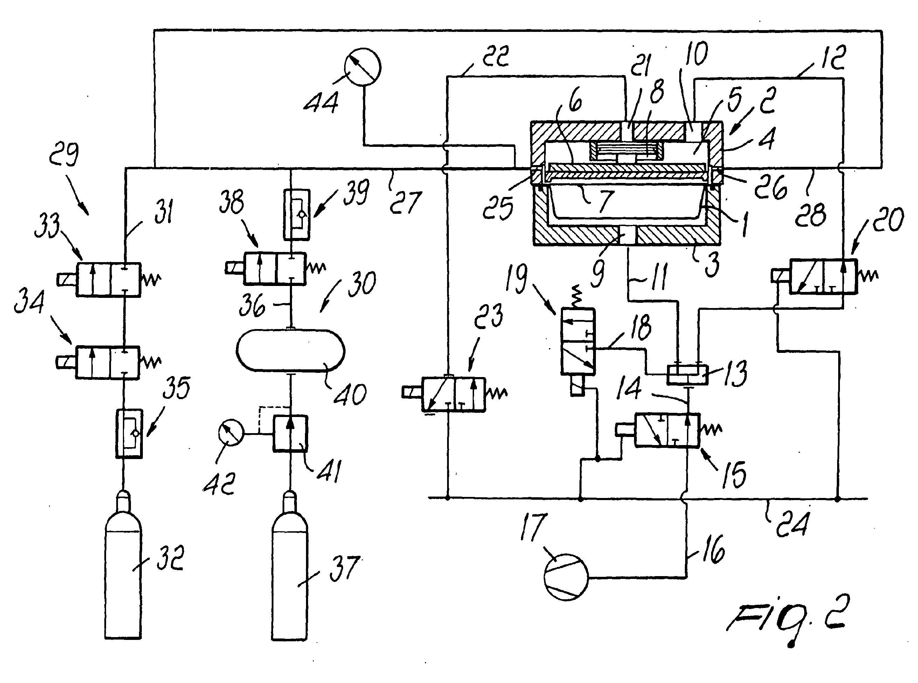

Then, as shown in Figure 2, the valve 19 is placed in the closed position, interrupting the connection of the ducts 11 and 12 to the atmosphere, while the valve 15 is moved into the second position, connecting the intake duct 16 to the ducts 11 and 12. In this manner, a preset degree of vacuum is produced inside the packaging enclosure 1 accommodated in the chamber 5. The other valves are kept in the same position shown in Figure 1.

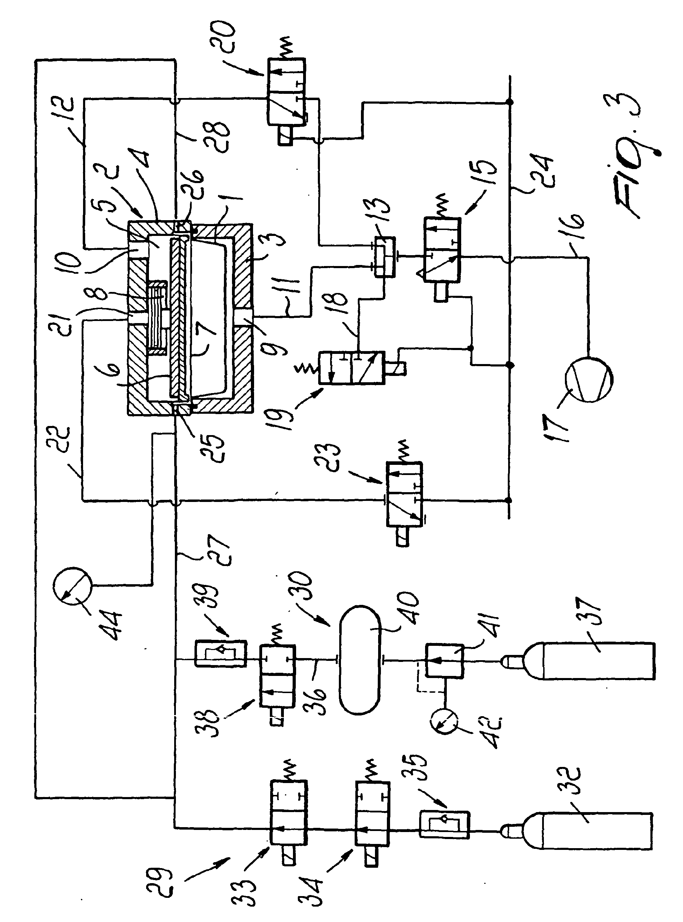

In the subsequent step, as shown in Figure 3, the valve 15 is again returned to the first position, connecting the intake duct 16 to the atmosphere, the valve 19 is kept closed and the valve 20 is moved to the closed position. The valves 33 and 34 are moved to the open position, so as to connect the reservoir 32, which contains the alcohol, to the ducts 27 and 28. In this manner, the alcohol dispensed by the reservoir 32 is drawn into the packaging enclosure 1, which is at a negative pressure. Since the alcohol is introduced in the packaging enclosure 1 at a pressure which is lower than the atmospheric pressure, it enters the packaging enclosure 1 as vapor and surrounds the products arranged inside the packaging enclosure 1.

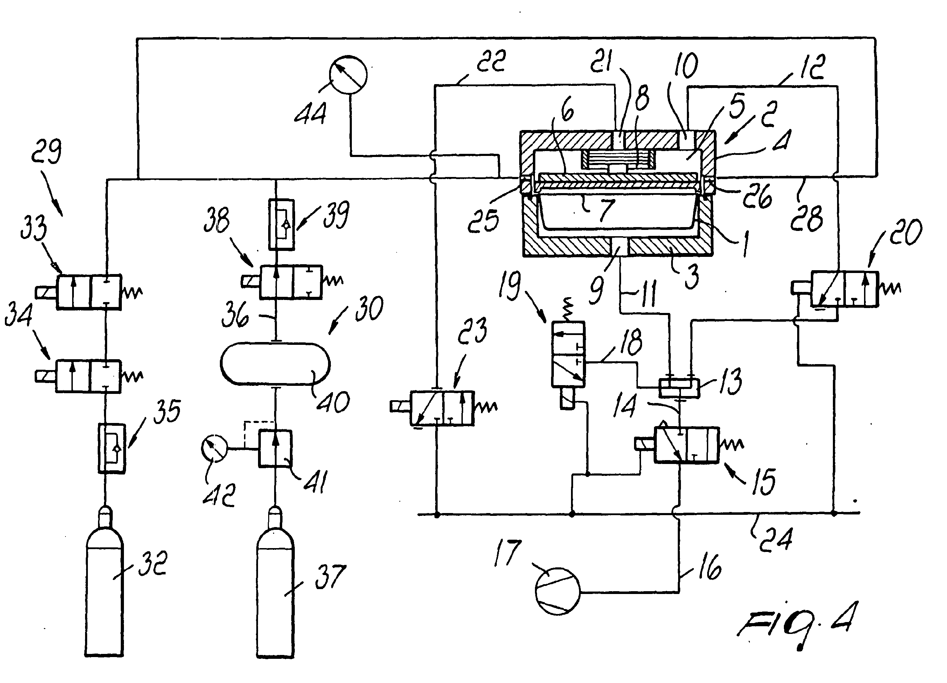

Then, as shown in Figure 4, the valves 33 and 34 are moved to the closed position and the valve 38 is opened, connecting the ducts 27 and 28 to the gas reservoir 37. The gas or gases dispensed by the reservoir 37 thus enter the packaging enclosure 1.

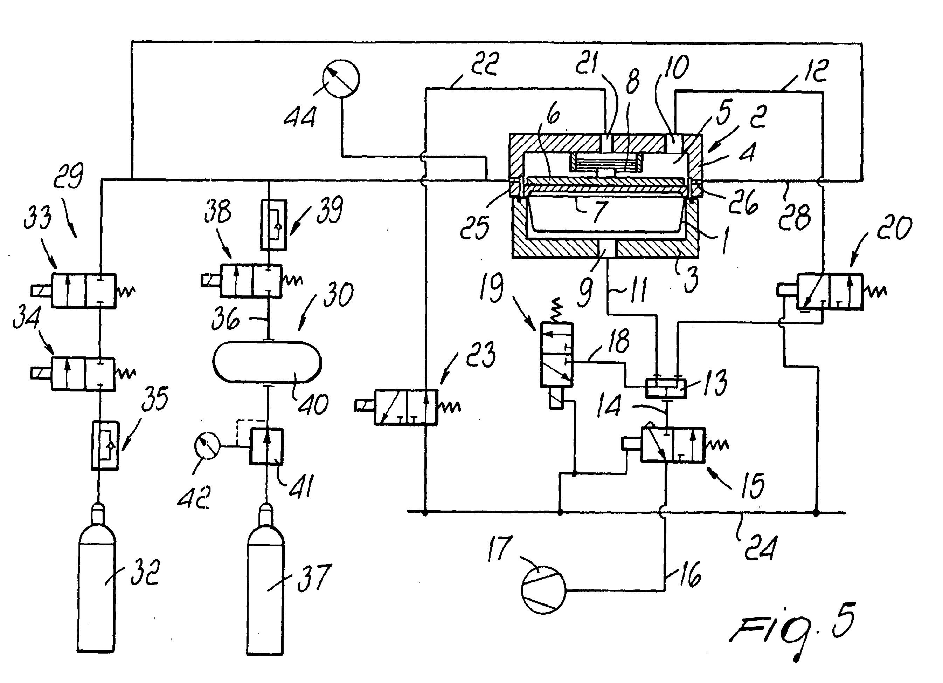

Finally, as shown in Figure 5, the valve 38 is closed again and the valve 23 is opened; by supplying the pneumatic cylinder 8, said valve causes the downward movement of the plate 6 toward the film 7, thus sealing the packaging enclosure 1. In this manner, inside the packaging enclosure 1, the products are surrounded by an atmosphere which is constituted by the alcohol and by the gas or gases that arrive from the reservoir 37.

The apparatus is then returned to the initial condition and the packaging enclosure 1, with the packaged products, is extracted and removed from the chamber 3.

Evidently, packaging by introducing in the packaging enclosure 1 a plurality of gases, such as for example carbon dioxide and nitrogen, can also be performed by providing two separate reservoirs 37 which can be connected to the ducts 27 and 38 by respective supply lines with respective valves which can be controlled so as to deliver the intended gas in the chosen amount inside the packaging enclosure 1.

The resulting package is meant to be preserved at a temperature which is substantially between 0 and 5°C.

In practice it has been observed that the method according to the invention fully achieves the intended aim and objects, since by packaging products inside a packaging enclosure and introducing therein alcohol after producing a preset degree of vacuum, it avoids stagnation of alcohol inside the products and allows to use considerably smaller amounts of alcohol than known methods. With the method according to the invention, the packaged products have a preservation period which is distinctly longer than obtainable with conventional methods. In particular, with the method according to the invention it is possible to achieve a preservation period for products such as for example fruit, particularly peeled apples, of more than 20 days, without oxidation of the fruit occurring during this period.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for packaging food products, particularly bakery products and fruit, in a modified atmosphere, consisting of the following steps:
a first step consisting of arranging the products to be packaged inside a packaging enclosure (1),
a second step consisting of producing a preset degree of vacuum inside said packaging enclosure (1) so that the pressure inside the enclosure is a negative pressure, that is a pressure lower than the atmospheric pressure,
a third step consisting of opening at least a controllable valve (33, 34) provided on a line (29) for the supply of alcohol or of a mixture based on alcohol so that said alcohol or said mixture based on alcohol is drawn and
vaporised into said packaging enclosure (1) by means of the negative pressure of the enclosure,
a fourth step consisting of introducing in said packaging enclosure at least one gas, and
a fifth step consisting of sealing said packaging enclosure.

2. A method according to claim 1, **characterized in that** said alcohol is constituted by ethyl alcohol.

3. A method according to claim 2, **characterized in that** said mixture based on ethyl alcohol is constituted by ethyl alcohol and natural flavoring agents.

4. A method according to one or more of the preceding claims, **characterized in that** said gas is constituted by air.

5. A method according to one or more of claims 1 to 3, **characterized in that** said gas is constituted by nitrogen.

6. A method according to one or more of claims 1 to 3, **characterized in that** said gas is constituted by carbon dioxide.

7. A method according to one or more of claims 1 to 3, **characterized in that** said gas is constituted by a mixture of carbon dioxide and nitrogen.

8. A method according to one or more of claims 2 to 7, **characterized in that** the amount by weight of ethyl alcohol introduced in the packaging enclosure is comprised between 0.01 and 3% of the weight of the product before packaging.

9. A method according to one or more of claims 2 to 8, **characterized in that** the amount by volume of ethyl alcohol introduced in the packaging enclosure is between 0.01 and 1% of the internal volume of the packaging enclosure.

10. A method according to claim 6, **characterized in that** the amount by volume of the carbon dioxide introduced in the packaging enclosure is up to 50% of the internal volume of the packaging enclosure.

11. A method according to claim 5, **characterized in that** the amount by volume of nitrogen introduced in the packaging enclosure is between 10 and 90% of the internal volume of the packaging enclosure.

12. Apparatus for packaging food products, particularly bakery products and fruit, in a modified atmosphere, comprising a packaging chamber (5) adapted to accommodate at least one packaging enclosure (1), aspirator means which can be connected to the inside of said packaging enclosure (1) and adapted to produce a preset degree of vacuum in said packaging enclosure (1), and further comprising, provided in said chamber (5), means for sealing (6) said packaging enclosure (1), **characterized in that** it comprises, first means (29) for introducing alcohol in said packaging enclosure (1) which is accommodated in said chamber (5), said first means (29) comprising at least one line (31) for supplying alcohol, said line for supplying alcohol (31) being provided with at least one controllable valve (33, 34) which can be opened when the packaging enclosure (1) is at a negative pressure, that is a pressure lower than the atmospheric pressure, in order to allow that said alcohol or said mixture based on alcohol is drawn and vaporised into said packaging enclosure (1) by means of said negative pressure of the enclosure, and **in that** it comprises, second means (30) for introducing at least one gas in said packaging enclosure (1) accommodated in said chamber (5), said second means (30) comprising at least one line (36) for the supply of said gas.

13. Apparatus according to claim 12, **characterized in that** said line (31) for the supply of alcohol or mixture based on alcohol comprises at least one controllable valve (33,34) being provided along said line in order to provide or interrupt the connection to the inside of said packaging enclosure, and a flow regulator (35).

14. Apparatus according to claim 13, **characterized in that** said second means (30) for introducing at least one gas in said packaging enclosure comprise a line (36) for the supply of said gas, a controllable valve (38) being provided along said line (36) in order to provide or interrupt the connection to the inside of said packaging enclosure (1), and a flow regulator (39).

15. Apparatus according to one or more of claims 12 to 14, **characterized in that** a buffer reservoir (40) for said gas is arranged along said line (36) for the supply of a gas.

16. Apparatus according to one or more of claims 12 to 15, **characterized in that** said gas is constituted by nitrogen.

17. Apparatus according to one or more of claims 12 to 15, **characterized in that** said gas is constituted by carbon dioxide.

18. Apparatus according to one or more of claims 12 to 15, **characterized in that** said gas is constituted by a mixture of nitrogen and carbon dioxide.

19. A package of food products, particularly bakery products and fruit, in a modified atmosphere, obtained by means of the method according to claims 5-7.

## Revendications

1. Une méthode pour emballer des produits alimentaires, et plus particulièrement les produits de la boulangerie et les fruits, dans une atmosphère modifiée et selon les étapes suivantes :
- une première étape qui consiste à disposer les produits devant être emballés dans une coque d'emballage (1) ;
- une seconde étape qui consiste à établir un taux de vide préétabli à l'intérieur de ladite coque d'emballage (1), de manière à obtenir une pression intérieure négative, soit une pression inférieure à la pression atmosphérique ;
- une troisième étape qui consiste à ouvrir au moins une vanne de réglage (33, 34) située sur une ligne d'alimentation (29) en alcool ou un mélange à base d'alcool, de façon à ce que ledit alcool ou ledit mélange à base d'alcool soit aspiré et vaporisé dans ladite coque d'emballage (1) grâce à la pression négative présente dans la coque d'emballage.
- une quatrième étape qui consiste à introduire dans ladite coque d'emballage au moins un gaz et,
- une cinquième étape qui consiste à sceller ladite coque d'emballage.

2. Une méthode selon la revendication 1, **caractérisée par le fait que** ledit alcool est constitué par de l'alcool éthylique.

3. Une méthode selon la revendication 2, **caractérisée par le fait que** le dit mélange à base d'alcool éthylique est constitué par de l'alcool éthylique et des agents de saveur naturels.

4. Une méthode selon une ou plusieurs des revendications précédentes, **caractérisée par le fait que** ledit gaz est constitué par de l'air.

5. Une méthode selon une ou plusieurs des revendications 1 à 3, **caractérisée par le fait que** ledit gaz est constitué par de l'azote.

6. Une méthode selon une ou plusieurs des revendications 1 à 3, **caractérisée par le fait que** ledit gaz est constitué par du dioxyde de carbone.

7. Une méthode selon une ou plusieurs des revendications 1 à 3, **caractérisée par le fait que** ledit gaz est constitué d'un mélange de dioxyde de carbone et d'azote.

8. Une méthode selon une ou plusieurs des revendications 2 à 7, **caractérisée par le fait que** la quantité en poids d'alcool éthylique introduite dans la coque d'emballage est comprise entre 0.01 et 3% du poids du produit avant emballage.

9. Une méthode selon une ou plusieurs des revendications 2 à 8, **caractérisée par le fait que** le volume d'alcool éthylique introduit dans la coque d'emballage varie de 0.01 à 1% du volume intérieur de la coque d'emballage.

10. Une méthode selon la revendication 6, **caractérisée par le fait que** le volume de dioxyde de carbone introduit dans la coque d'emballage peut atteindre 50% du volume intérieur de la coque.

11. Une méthode selon la revendication 5, **caractérisée par le fait que** le volume d'azote introduit dans la coque d'emballage varie de 10 à 90% du volume intérieur de la coque d'emballage.

12. Un dispositif pour emballer des produits alimentaires, en particulier les produits de boulangerie et les fruits, dans une atmosphère modifiée, comprenant une enceinte de conditionnement (5) adaptée pour contenir au minimum une coque d'emballage (1), des moyens d'aspiration pouvant être relié à l'intérieur de ladite coque d'emballage (1) et adapté pour donner un taux de vide prédéfini dans ladite coque d'emballage (1), et comportant également, installé dans ladite enceinte de conditionnement (5), des moyens pour sceller (6) ladite coque d'emballage (1), **caractérisé par le fait qu'**il comprend un premier moyen (29) pour introduire l'alcool dans ladite coque d'emballage (1) installée dans l'enceinte de conditionnement (5), ledit moyen (29) comportant au moins une ligne (31) d'alimentation en alcool, ladite ligne (31) étant munie d'au moins une vanne de réglage (33, 34) pouvant être ouverte lorsque la coque d'emballage (1) est en dépression, c'est-à-dire avec une pression inférieure à la pression atmosphérique, afin de permettre que ledit alcool ou ledit mélange à base d'alcool soit aspiré et vaporisé dans ladite coque d'emballage (1) grâce à la dépression dans la coque, et **caractérisé** aussi **par le fait qu'**il comprend un deuxième moyen (30) pour introduire au moins un autre gaz dans ladite coque d'emballage (1) installée dans ladite enceinte (5), ce deuxième moyen comportant au moins une ligne (36) d'alimentation dudit gaz.

13. Un dispositif selon la revendication 12, **caractérisé par le fait que** ladite ligne d'alimentation (31) de l'alcool ou d'un mélange à base d'alcool, comporte au moins une vanne de réglage (33, 34) installée sur ladite ligne pour ouvrir ou fermer la liaison avec l'intérieur de ladite coque d'emballage, et un régulateur de débit (35).

14. Un dispositif selon la revendication 13, **caractérisé par le fait que** ledit deuxième moyen (30) d'alimentation en gaz dans ladite coque d'emballage, comprend une ligne (36) pour l'alimentation dudit gaz, une vanne de réglage (38) étant installée sur ladite ligne (36) pour permettre le passage ou l'interruption de la liaison avec l'intérieur de ladite coque d'emballage (1) et un régulateur de débit (39).

15. Un dispositif selon une ou plusieurs des revendications 12 à 14, **caractérisé par le fait qu'**un réservoir tampon (40) dudit gaz est installé sur ladite ligne d'alimentation (36) en gaz.

16. Un dispositif selon une ou plusieurs des revendications 12 à 15, **caractérisé par le fait que** ledit gaz est constitué par de l'azote.

17. Un dispositif selon une ou plusieurs des revendications 12 à 15, **caractérisé par le fait que** ledit gaz est constitué par du dioxyde de carbone.

18. Un dispositif selon une ou plusieurs des revendications 12 à 15, **caractérisé par le fait que** ledit gaz est constitué d'un mélange d'azote et de dioxyde de carbone.

19. Un emballage de produits alimentaires, particulièrement de la boulangerie ou des fruits, dans une atmosphère modifiée, obtenu au moyen de la méthode selon les revendications 5 à 7.

## Patentansprüche

1. Verfahren zum Verpacken von Produkten, insbesondere Backwaren und Früchte, in einer geänderten Atmosphäre, das die folgenden Schritte aufweist:
ein erster Schritt des Anordnens der zu verpackenden Produkte innerhalb einer Verpackung (1),
ein zweiter Schritt des Erzeugens einer festgesetzten Güte von Vakuum innerhalb der Verpackung (1), sodass der Druck innerhalb der Verpackung ein negativer Druck ist, was ein geringerer Druck als der Atmosphärendruck ist,
ein dritter Schritt des Öffnens zumindest eines steuerbaren Ventils (33, 34), das an einer Leitung (29) für die Zuführung von Alkohol oder von einer auf Alkohol basierenden Mischung vorgesehen ist, sodass der Alkohol oder die auf Alkohol basierende Mischung in die Verpackung (1) durch den negativen Druck der Verpackung gezogen und verdampft wird,
ein vierter Schritt des Einführens in die Verpackung zumindest eines Gases, und
ein fünfter Schritt des Abdichtens der Verpackung.

2. Verfahren nach Anspruch 1, **dadurch gekennzeichnet, dass** der Alkohol durch Ethylalkohol gebildet wird.

3. Verfahren nach Anspruch 2, **dadurch gekennzeichnet, dass** die auf Ethylalkohol basierende Mischung durch Ethylalkohol und natürliche Geschmacksstoffe gebildet wird.

4. Verfahren nach einem oder mehreren der vorstehenden Ansprüche, **dadurch gekennzeichnet, dass** das Gas durch Luft gebildet wird.

5. Verfahren nach einem oder mehreren der Ansprüche 1 bis 3, **dadurch gekennzeichnet, dass** das Gas durch Stickstoff gebildet wird.

6. Verfahren nach einem oder mehreren der Ansprüche 1 bis 3, **dadurch gekennzeichnet, dass** das Gas durch Kohlendioxid gebildet wird.

7. Verfahren nach einem oder mehreren der Ansprüche 1 bis 3, **dadurch gekennzeichnet, dass** das Gas durch eine Mischung aus Kohlendioxid und Stickstoff gebildet wird.

8. Verfahren nach einem oder mehreren der Ansprüche 2 bis 7, **dadurch gekennzeichnet, dass** die Gewichtsmenge des Ethylalkohols, der in die Verpackung eingeführt wird, zwischen 0,01 und 3 % des Gewichtes des Produktes vor dem Verpacken beträgt.

9. Verfahren nach einem oder mehreren der Ansprüche 2 bis 8, **dadurch gekennzeichnet, dass** die Volumenmenge des Ethylalkohols, der in die Verpackung eingeführt wird, zwischen 0,01 und 1 % des Innenvolumens der Verpackung beträgt.

10. Verfahren nach Anspruch 6, **dadurch gekennzeichnet, dass** die Volumenmenge des Kohlendioxids, das in die Verpackung eingeführt wird, bis zu 50 % des Innenvolumens der Verpackung beträgt.

11. Verfahren nach Anspruch 5, **dadurch gekennzeichnet, dass** die Volumenmenge des Stickstoffs, der in die Verpackung eingeführt wird, zwischen 10 und 90 % des Innenvolumens der Verpackung beträgt.

12. Vorrichtung zum Verpacken von Nahrungsmitteln, insbesondere Backwaren und Früchte, in einer veränderten Atmosphäre, mit einer Verpackungskammer (5), die ausgebildet ist, zumindest eine Verpackung (1) unterzubringen, einer Saugvorrichtung, die mit dem Inneren der Verpackung (1) verbunden werden kann und ausgebildet ist, eine festgesetzte Güte von Vakuum in der Verpackung (1) zu erzeugen, und femer mit einer in der Kammer (5) vorgesehenen Vorrichtung zum Abdichten (6) der Verpackung (1), **dadurch gekennzeichnet, dass** die Vorrichtung eine erste Vorrichtung (29) zum Einführen von Alkohol in die Verpackung (1) aufweist, die in der Kammer (5) untergebracht ist, wobei die erste Vorrichtung (29) zumindest eine Leitung (31) zum Zuführen von Alkohol aufweist, wobei die Leitung zum Zuführen von Alkohol (31) mit zumindest einem steuerbaren Ventil (33, 34) versehen ist, welches geöffnet werden kann, wenn die Verpackung (1) einen negativen Druck aufweist, was ein geringerer Druck als der Atmosphärendruck ist, um zu ermöglichen, dass der Alkohol oder die auf Alkohol basierende Mischung in die Verpackung (1) durch den negativen Druck der Verpackung gezogen und verdampft ist, und dass die Vorrichtung eine zweite Vorrichtung (30) zum Einführen zumindest eines Gases in die Verpackung (1) aufweist, die in der Kammer (5) untergebracht ist, wobei die zweite Vorrichtung (30) zumindest eine Leitung (36) für die Zuführung des Gases aufweist.

13. Vorrichtung nach Anspruch 12, **dadurch gekennzeichnet, dass** die Leitung (31) zur Zuführung des Alkohols oder der auf Alkohol basierenden Mischung zumindest ein steuerbares Ventil (33, 34), das entlang der Leitung vorgesehen ist, um eine Verbindung mit dem Inneren der Verpackung bereitzustellen oder zu unterbrechen, und einen Flussregler (35) aufweist.

14. Vorrichtung nach Anspruch 13, **dadurch gekennzeichnet, dass** die zweite Vorrichtung (30) zum Einführen zumindest eines Gases in die Verpackung eine Leitung (36) für die Zuführung des Gases, ein steuerbares Ventil (38), das entlang der Leitung (36) vorgesehen ist, um die Verbindung des Inneren der Verpackung (1) bereitzustellen oder zu unterbrechen, und einen Flussregler (39) aufweist.

15. Vorrichtung nach einem oder mehreren der Ansprüche 12 bis 14, **dadurch gekennzeichnet, dass** ein Speicherbehälter (40) für das Gas entlang der Leitung (36) für die Zuführung eines Gases angeordnet ist.

16. Vorrichtung nach einem oder mehreren der Ansprüche 12 bis 15, **dadurch gekennzeichnet, dass** das Gas durch Stickstoff gebildet ist.

17. Vorrichtung nach einem oder mehreren der Ansprüche 12 bis 15, **dadurch gekennzeichnet, dass** das Gas durch Kohlendioxid gebildet ist.

18. Vorrichtung nach einem oder mehreren der Ansprüche 12 bis 15, **dadurch gekennzeichnet, dass** das Gas durch eine Mischung aus Stickstoff und Kohlendioxid gebildet ist.

19. Verpackung für Nahrungsmittel, insbesondere Backwaren und Früchte, in einer veränderten Atmosphäre, die durch das Verfahren gemäß der Ansprüche 5 bis 7 erhalten ist.
